# EUROPÄISCHE PATENTSCHRIFT

(11) **EP 2 310 687 B1**
(45) Veröffentlichungstag und Bekanntmachung des Hinweises auf die Patenterteilung: **10.07.2019**
(21) Anmeldenummer: 09779588.4
(22) Anmeldetag: 29.05.2009
(51) Int. Cl.: F04D 19/04, F04D 29/058

(54) **VAKUUMPUMPE**
VACUUM PUMP
POMPE À VIDE

(30) Priorität: 31.07.2008 DE 102008035891
(43) Veröffentlichungstag der Anmeldung: 20.04.2011
(73) Patentinhaber: Leybold GmbH, 50968 Köln (DE)
(72) Erfinder: ENGLÄNDER, Heinrich, 52441 Linnich (DE)
(74) Vertreter: dompatent von Kreisler Selting Werner - Partnerschaft von Patent- und Rechtsanwälten mbB
(86) Internationale Anmeldenummer: PCT/EP2009/056645
(87) Internationale Veröffentlichungsnummer: WO 2010/012526

(56) Entgegenhaltungen:
- EP-A- 1 574 719
- EP-A- 1 890 041
- WO-A2-2004/055376
- DE-A1- 2 349 033
- JP-A- 8 219 086
- JP-A- 2000 161 284
- US-A- 5 501 583

## Beschreibung

Die Erfindung betrifft eine Turbomolekularpumpe.

Turbomolekularpumpen weisen eine mindestens einen Rotor mit mehreren Rotorscheiben aufweisenden Rotoreinrichtung auf. Zwischen den Rotorscheiben sind von Statorringen gehaltenen Statorscheiben angeordnet. Die Rotoreinrichtung ist auf einer schnell rotierenden Rotorwelle angeordnet. Turbomolekularpumpen weisen einen saugseitigen Einlass sowie einen druckseitigen Auslass auf. Am saugseitigen Einlass können Enddrücke von ggf. weniger als 1 · 10⁻¹⁰ mbar erzielt werden. An dem druckseitigen Pumpenanschluss sind häufig zusätzliche Vor-Vakuumpumpen angeschlossen.

Multi-Inlet-Pumpen weisen zusätzlich zu einem saugseitigen Haupteinlass mindestens einen Zwischeneinlass auf. Üblicherweise weist die Rotoreinrichtung einer Multi-Inlet-Pumpe zwei Pumpstufen, von denen eine als Turbomolekularstufe ausgebildet ist, auf, wobei zwischen den beiden Pumpstufen der Zwischeneinlass angeordnet ist. In Förderrichtung den Turbomolekularstufen nachgeordnet ist häufig eine weitere Pumpstufe, wie eine Holweck-Stufe, vorgesehen. Durch Multi-Inlet-Pumpen können unterschiedliche Druckniveaus am Haupt- und an dem mindestens einen Zwischeneinlass erzielt werden.

Die Lagerung der Rotorwelle von insbesondere schnell drehenden Vakuumpumpen, wie Turbomolekularpumpen und Multi-Inlet-Pumpen, kann druckseitig, d.h. in Bereichen, in denen keine niedrigen Drücke herrschen, über elektromagnetische Lager erfolgen. Hierbei werden elektromagnetische Lager bei bekannten Vakuumpumpen in Druckbereichen bis zu 120 mbar eingesetzt. Ferner ist es bekannt, die Rotorwelle im Hochvakuumbereich durch passive Magnetmagnetlager zu lagern.

Der Einsatz von elektromagnetischen Lagern ist zur saugseitigen Lagerung einer Vakuumpumpe auf Grund der hier herrschenden niedrigen Drücke nicht üblich, da es sich bei den verwendeten Spulenkörpern und Sensoreinrichtungen um Komponenten mit großen Oberflächen und vielen Hohlräumen handelt. Hierdurch ist das Erreichen des gewünschten Enddrucks auf Grund des anhaltenden Ausgasens nicht oder zumindest nur schwer erzielbar. Ferner ist es bekannt, im Hochvakuumbereich passive Permanentmagnetlager einzusetzen.

Um die gesamte Rotorwelle elektromagnetisch lagern zu können, ist in DE 20 2005 019 644 vorgeschlagen, die beiden elektromagnetischen Lager innerhalb einer Kartusche anzuordnen. In der Kartusche ist die Rotorwelle zusammen mit den Lagern und dem Elektromotor angeordnet. Die Kartusche ist im Wesentlichen in Richtung der Druckseite offen, so dass in der Kartusche Atmosphärendruck oder zumindest ein relativ hoher, an der Druckseite der Pumpe anliegender Druck herrscht. Die Rotorwelle weist einen aus der Kartusche herausragenden Ansatz auf, der die Rotoreinrichtung trägt. Die Rotoreinrichtung ist somit an einem auskragenden Ende der Welle befestigt. Hierdurch ist die Baulänge der Pumpe beschränkt. Ferner treten auf Grund der Befestigung der Rotoreinrichtung auf dem auskragenden Wellenende an den Lagerstellen hohe Kräfte auf, so dass entsprechend aufwändige elektromagnetische Lager vorgesehen sein müssen. Ebenso wird diese Bauart durch das rotordynamische Verhalten stark eingeschränkt, da insbesondere niedrige Eigenfrequenzen auftreten.

Ferner ist aus JP 2000-161284 eine Kreisel- bzw. Vortex-Pumpe bekannt. Im Ansaugbereich der Pumpe ist ein Magnetlager angeordnet, wobei bei derartigen Pumpen im Saugbereich kein Hochvakuum erzeugt wird.

Ferner ist es aus DE 44 10 656 bekannt, Wirbelstromlager vorzusehen. Diese unterscheiden sich grundlegend von elektromagnetischen Lagern, da sich Wirbelstromlager aus den Feldern der gegenüberliegenden Permanentmagneten speisen. Derartige Lageranordnungen können insbesondere für die Lagerung von Rotorwellen bei Turbomolekularpumpen nicht eingesetzt werden, da Wirbelstromlager sehr instabil sind. Ferner würde der Rotor hierdurch aufgrund der ohmschen Verluste in den leitenden Scheiben stark aufgeheizt bis sich zur Lagerung tragfähige Ströme einstellen. Des Weiteren tritt hierdurch ein Bremsen des Rotors auf. Dies zieht einen Anstieg der erforderlichen Antriebsleistung nach sich.

Aus US 5,501,583 ist eine Turbomolekularpumpe mit den Merkmalen des Oberbegriffs des Anspruchs 1 bekannt. Bei dieser Vakuumpumpe ist die ein elektromagnetisches Lager aufweisende saugseitige Lageranordnung vom Hochvakuumbereich durch erste und zweite Dichtmittel abgetrennt und in einer Ausnehmung des Gehäuses angeordnet, die sich in Form eines Kreisring-Zylinders um den Rotor herum erstreckt. Das Verschließelement ist dabei als senkrecht zum Rotor angeordnete Scheibe ausgebildet, die in ihrem Zentrum vom Rotor durchsetzt wird.

Aufgabe der Erfindung ist es, eine Turbomolekularpumpe mit verbesserten Lageranordnungen zu schaffen.

Die Lösung der Aufgabe erfolgt erfindungsgemäß durch die Merkmale des Anspruchs 1.

Die erfindungsgemäße Turbomolekularpumpe weist eine Rotorwelle auf, die eine Rotoreinrichtung trägt, wobei die Rotoreinrichtung ggf. mehrere Rotoren oder andere Saug- bzw. Pumpeinrichtungen aufweisen kann. Die Rotorwelle ist über üblicherweise zwei Lageranordnungen, eine druckseitige und eine saugseitige Lageranordnung, gelagert. Erfindungsgemäß ist die saugseitige Lageranordnung in einem Hochvakuumbereich angeordnet und somit niedrigen Drücken ausgesetzt. Ferner handelt es sich bei der saugseitigen Lageranordnung erfindungsgemäß um ein elektromagnetisches Lager. Unter Hochvakuum wird ein Druck von weniger als 10⁻³ mbar, insbesondere weniger als 10⁻⁵ mbar und besonders bevorzugt weniger als 10⁻¹⁰ mbar verstanden.

Insbesondere beim Anordnen des elektromagnetischen Lagers im Bereich von sehr niedrigen Drücken, wie sie auf der Saugseite, d.h. im Einlassbereich einer Turbomolekularpumpe, auftreten, erfolgt erfindungsgemäß ein Anordnen der Spule des elektromagnetischen Lagers in einer druckgekapselten Ausnehmung. Auf Grund der Anordnung der Spule in einer druckgekapselten Ausnehmung ist gewährleistet, dass die Spule selbst nicht unmittelbar dem Hochvakuum ausgesetzt ist und nur noch das mit der Spule korrespondierende Lagerelement auf dem Rotor im Hochvakuum liegt. Hierdurch ist der Nachteil vermieden, dass auf Grund der zahlreichen Hohlräume innerhalb der Spule auf Grund des anhaltenden Ausgasens ein Erreichen des Enddrucks nicht oder nur schwer möglich ist. Durch das erfindungsgemäße Vorsehen eines elektromagnetischen Lagers im Hochvakuumbereich ist es möglich, die Rotorwelle in deren Endbereichen zu lagern. Insbesondere kann die Rotoreinrichtung zwischen den beiden Lagern mit der Rotorwelle verbunden werden. Die Befestigung der Rotoreinrichtung an einem Kragarm der Welle und somit eine fliegende Lagerung des Rotors ist nicht mehr erforderlich. Ferner können, sofern auch die druckseitige Lageranordnung als elektromagnetisches Lager ausgebildet ist, auf Grund der sodann vollständigen elektromagnetischen Lagerung der Welle, höhere Drehzahlen erzielt werden, da die Welle sehr steif ausgebildet werden kann und Dämpfung und Steifigkeit in den Lagerstellen durch Software parametriert werden kann.

Erfindungsgemäss ist saugseitig ausschließlich ein elektromagnetisches Lager vorgesehen. Dieses wird aus Sicherheitsgründen allenfalls durch ein Fanglager ergänzt. Das saugseitige Lager kann hierbei derart ausgebildet sein, dass es sich sowohl um ein elektromagnetisches Radiallager als auch um ein elektromagnetisches Axiallager handelt, wobei die beiden Lagerrichtungen durch zwei gesonderte elektromagnetische Lager ausgebildet sein können. In besonders bevorzugter Ausführungsform erfolgt saugseitig ausschließlich eine radiale Lagerung durch ein entsprechendes radiales elektromagnetisches Lager. Die Axiallagerung erfolgt sodann insbesondere auf der gegenüberliegenden Seite der Welle, d. h. druckseitig.

Erfindungsgemäss ist die Ausnehmung in einem Gehäuseelement, d.h. vorzugsweise in einem mit dem Gehäuse verbundenen stationären Element, angeordnet. Eine Öffnung der Ausnehmung ist hierbei vorzugsweise in Richtung der Rotorwelle gerichtet. Erfindungsgemäss ist die Ausnehmung kreisringförmig und umgibt die Rotorwelle vollständig. Somit ist es möglich, innerhalb der Ausnehmung eine ringförmige Spule eines Elektromagneten anzuordnen. Hierbei können die elektrischen Zuleitungen vorzugsweise durch das Gehäuse in die Ausnehmung und nicht von Seiten der in Richtung der Rotorwelle vorgesehenen Öffnung der Ausnehmung zugeführt werden.

Zur Druckkapselung, d.h. zur Abdichtung der Ausnehmung, wäre es beispielsweise auch möglich, nach dem Anordnen der Spule in der Ausnehmung diese mit Kunstharz oder dgl. auszugießen. Bei sehr niedrigen Drücken weist das Verwenden von Kunstharz oder dgl. jedoch den Nachteil auf, dass beispielsweise Weichmacher im Hochvakuum ausgasen, wodurch beispielsweise ein Verfälschen von Analyseergebnissen auftreten kann.

Erfindungsgemäss ist die Öffnung der Ausnehmung durch ein rohrförmiges Verschließelement dicht verschlossen. Die vorzugsweise nach innen in Richtung der Rotorwelle weisende Öffnung kann somit auf einfache Weise durch ein rohrförmiges Schließelement verschlossen werden. Bei der erfindungsgemässen kreisringzylindrischen Ausnehmung entspricht die Öffnung der Ausnehmung der inneren Mantelfläche des Kreisringzylinders. Das Verschließelement ist erfindungsgemäss über Dichtelemente, wie O-Ringe dichtend mit dem Gehäuseelement verbunden.

Vorzugsweise ist die saugseitige Lageranordnung ausschließlich als elektromagnetisches Radiallager ausgebildet. Dies hat den Vorteil, dass die Abkapselung der elektromagnetischen Spule auf einfache Weise realisierbar ist. Ferner ist es technisch einfacher, die axiale Lagerung der Rotorwelle auf der Druckseite zu realisieren. Hier ist auf einfache Weise eine elektromagnetische axiale Lagerung möglich, da die herrschenden Drücke deutlich höher sind und somit eine Abkapselung der elektromagnetischen Spule nicht erforderlich ist. Insbesondere ist es möglich, das druckseitige Lager als Radial- und Axiallager auszubilden, wobei in bevorzugter Ausführungsform ein elektromagnetisches Kombinationslager vorgesehen ist, so dass durch ein elektromagnetisches Lager sowohl die axiale als auch die radiale Lagerung der Rotorwelle auf der Druckseite realisiert ist.

Des Weiteren ist es vorteilhaft, Lagersensoren, die insbesondere die Lage der Rotorwelle bestimmen, ebenfalls innerhalb der gekapselten Ausnehmung anzuordnen. Mit Hilfe der Lagersensoren, die vorzugsweise mit einer entsprechenden Elektronik verbunden sind, erfolgt ein Regeln der Elektromagnete.

Bei der erfindungsgemäßen Ausgestaltung der Lagerung der Rotorwelle ist die saugseitige Lageranordnung bei Turbomolekularpumpen mit einem einzigen Einlass und einem Auslass unmittelbar im Einlassbereich, in dem Hochvakuum herrscht, angeordnet. Die Lagerung der Rotorwelle kann somit an deren Endbereich erfolgen, so dass der Rotor der Turbomolekularpumpe zwischen den beiden Lageranordnungen angeordnet ist.

Nachfolgend wird die Erfindung unter Bezugnahme auf die anliegenden Zeichnungen näher erläutert.

Es zeigen:
- Fig. 1: eine schematische Schnittansicht einer Turbomolekularpumpe mit erfindungsgemäßer Lageranordnung, und
- Fig. 2: eine schematische Schnittansicht einer Multi-Inlet-Pumpe, die jedoch nicht die Erfindung zeigt und nur als Hintergrundwissen beschrieben wird.

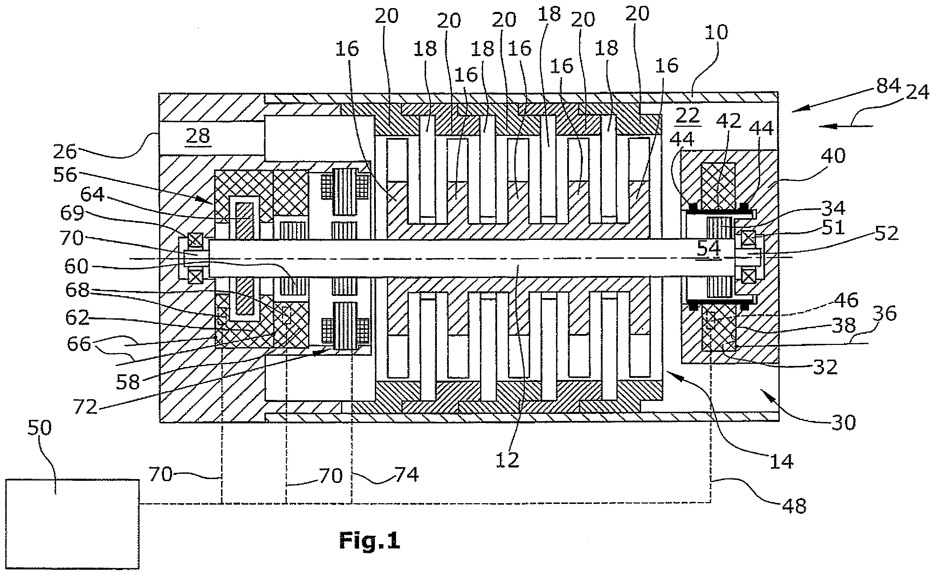

Eine Turbomolekularpumpe, wie sie schematisch in Fig. 1 dargestellt ist, weist in einem Gehäuse 10 eine Rotorwelle 12 auf. Die Rotorwelle 12 trägt eine, im dargestellten Ausführungsbeispiel einen Rotor ausbildende Rotoreinrichtung 14. Die Rotoreinrichtung 14 weist mehrere Rotorscheiben 16 auf. Zwischen den Rotorscheiben 16 sind Statorscheiben 18 angeordnet, die von Statorringen 20 fixiert sind. Eine Saugseite 22 der Pumpe stellt den Hochvakuumanschluss dar, so dass Medium in Richtung eines Pfeils 24 angesaugt wird. Ein Auslass 26 der Turbomolekularpumpe bzw. die Druckseite 28 ist üblicherweise mit einer Vor-Vakuumpumpe verbunden.

Erfindungsgemäß weist eine saugseitige Lageranordnung 30 ein elektromagnetisches Lager auf. Dies weist eine Spule 32 eines Elektromagneten sowie ein fest mit der Rotorwelle 12 rotierendes Lagerelement 34 auf, bei dem es sich beispielsweise um sogenannte Elektrobleche handelt. Die Spule 32 ist mit einem elektrischen Anschluss 36 zur Energieversorgung verbunden. Die Spule 32 ist in einer, im dargestellten Ausführungsbeispiel als Kreisring-Zylinder ausgebildeten, Ausnehmung 38 eines Gehäuseelements 40 ausgebildet. Die Ausnehmung 38 umgibt die Rotorwelle 12 in einem Endbereich. Die Ausnehmung 38 ist durch ein rohrförmiges Verschließelement 42 sowie Dichtelemente 44, bei denen es sich insbesondere um O-Ringe handelt, verschlossen, so dass die Ausnehmung 38 druckgekapselt ist. Innerhalb der Ausnehmung 38 herrscht somit nicht das in dem Bereich 22 herrschende hohe Vakuum. Hierdurch ist vermieden, dass die in der Spule vorhandenen zahlreichen Hohlräume das Erreichen des Enddrucks erschweren oder gar verhindern..

Zur Regelung der der Spule 32 über die Leitung 36 zugeführten Spannung ist innerhalb der Ausnehmung 38 ferner mindestens ein gestrichelt dargestellter Lagersensor 46 angeordnet, der insbesondere die Lage der Welle 12 detektiert. Über eine Leitung 48 wird das Signal des Lagersensors 46 an eine Elektronik 50 weitergeleitet, durch die sodann insbesondere die Höhe der der Spule 32 zugeführten Spannung geregelt wird.

Zusätzlich weist die dargestellte saugseitige Lageranordnung 30 ein beispielsweise als Kugellager ausgebildetes, mechanisches Fanglager 51 auf. Das Fanglager 51 ist in dem Gehäuseelement 40 angeordnet und weist einen geringen Abstand zu einem Zapfen 52 der Welle 12 auf. Das Fanglager dient im Wesentlichen zur Gewährleistung von Notlaufeigenschaften bei einem Ausfall des elektromagnetischen Lagers. Im dargestellten Ausführungsbeispiel ist das Gehäuseelement 40 topfförmig ausgebildet und umgibt einen saugseitigen Endbereich 54 der Rotorwelle 12.

Im dargestellten Ausführungsbeispiel ist die auf der Druckseite 28 vorgesehene Lageranordnung 56 ebenfalls als elektromagnetische Lageranordnung ausgebildet. Zur Radiallagerung ist eine elektromagnetische Spule 58 vorgesehen, die mit einem auf der Welle 12 angeordneten Lagerelement 60 zusammenwirkt, das dem Lagerelement 34 entspricht. Zur axialen Lagerung ist im dargestellten Ausführungsbeispiel eine zweite, im Querschnitt U-förmige, elektromagnetische Spule 62 angeordnet, die mit einem weiteren, auf der Welle 12 angeordneten Lagerelement (Axialscheibe) 64 zusammen wirkt. Die Axialscheibe 64 ragt in die Ausnehmung der Spule 62 zur Ausbildung des Axiallagers. Die beiden Spulen 58, 62 weisen jeweils eine elektrische Anschlussleitung 66 auf. Des Weiteren weist die Lageranordnung gestrichelt dargestellte Lagesensoren 68 zur Detektierung der Lage der Welle 12 in axialer bzw. radialer Richtung auf. Diese sind über Leitungen 70 ebenfalls mit der Elektronik 50 verbunden, die in Abhängigkeit der Sensorsignale die Spulenspannungen regelt.

Entsprechend der ein elektromagnetisches Lager aufweisenden Lageranordnung 30 weist auch die Lageranordnung 36 ein üblicherweise als Kugellager ausgebildetes Fanglager 69 auf, das einen Lagerzapfen 70 in einem Abstand umgibt.

Der Antrieb der Rotorwelle 12 erfolgt über eine, üblicherweise einen Elektromotor aufweisende Antriebseinrichtung 72, die über eine Leitung 74 ebenfalls mit der Elektronik 50 zur Regelung verbunden sein kann.

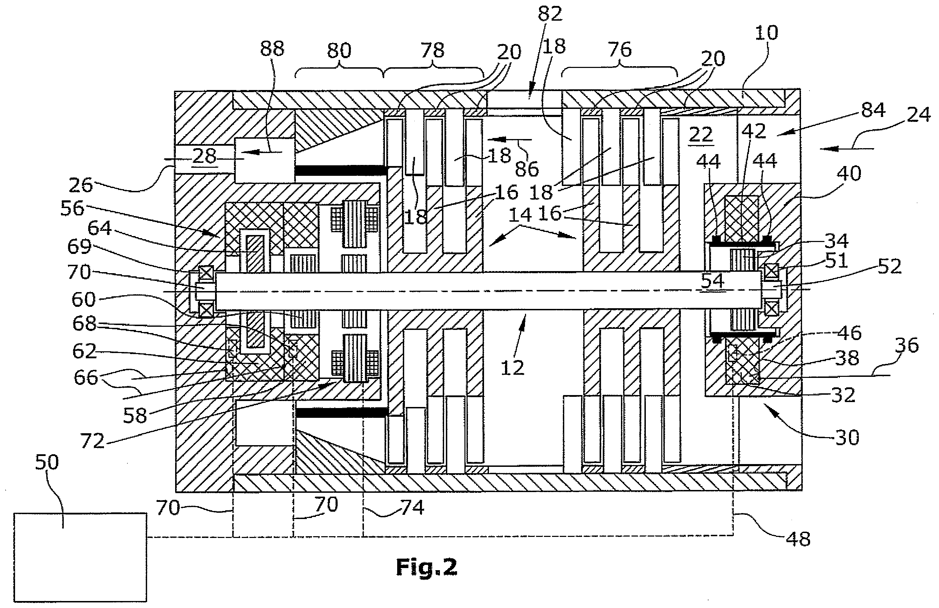

Bei der in Fig. 2 dargestellten schematischen Schnittansicht handelt es sich um eine nicht unter die Erfindung fallende Multi-Inlet-Pumpe. Die saugseitige Lageranordnung 30 sowie die druckseitige Lageranordnung 56 ist identisch wie bei der in Fig. 1 beschriebenen Turbomolekularpumpe ausgebildet. Identische und ähnliche Bauteile weisen dieselben Bezugszeichen wie bei der Turbomolekularpumpe (Fig. 1) auf.

Die ebenfalls in ihren beiden Endbereichen über die Lageranordnungen 30 und 56 gelagerte Rotorwelle 12 weist bei einer Multi-Inlet-Pumpe eine Rotoreinrichtung mit mehreren Verdichterstufen 76, 78, 80 auf. Bei den ersten beiden Verdichterstufen 76, 78 handelt es sich im dargestellten Ausführungsbeispiel um Turbomolekularstufen, die jeweils einen Rotor 14 mit Rotorscheiben 16 aufweisen. Zwischen den Rotorscheiben 16 sind von Statorringen 20 gehaltene Statorscheiben 18 angeordnet. Die beiden Rotoren 14 sind in einem Abstand zueinander auf der Rotorwelle 12 angeordnet. Zwischen den beiden Rotoren 14 weist das Gehäuse 10 eine Einlassöffnung 82 auf, bei der es sich um den Zwischeneinlass handelt.

Ferner weist die in Fig. 2 dargestellte Multi-Inlet-Pumpe einen Haupteinlass 84, bei dem es sich um den Hochvakuumanschluss handelt, auf. Durch den Haupteinlass strömt das angesaugte Gas in Richtung eines Pfeils 24. Im Bereich des Zwischeneinlasses 82 wird zusätzlich, wie durch den Pfeil 86 dargestellt, durch den Zwischeneinlass Medium angesaugt und in Fig. 2 nach links gefördert.

Die dritte Verdichterstufe fördert das Medium sodann, wie durch einen Pfeil 88 dargestellt, in Richtung der Druckseite 28 bzw. des Auslasses 26. Mit dem Auslass 26 ist üblicherweise eine Vor-Vakuumpumpe verbunden.

Die dritte Verdichtungsstufe 80 kann beispielsweise durch eine Holweck-Stufe oder dgl. ausgebildet sein. Üblicherweise sind die rotierenden Teile der dritten Verdichterstufe über den in Fig. 2 linken Rotor 14 ebenfalls mit der Rotorwelle 12 verbunden und gemeinsam angetrieben.

Durch die analog zur erfindungsgemäßen Turbomolekularpumpe ausgestalteten saugseitigen Lageranordnung 30 ist es möglich, die beiden Lageranordnungen 56, 30 an den Wellenenden vorzusehen, so dass ein maximaler Lagerabstand realisierbar ist.

## Patentansprüche

1. Turbomolekularpumpe mit
einer mindestens eine Rotoreinrichtung (14) tragenden Rotorwelle (12), und
einer druckseitigen Lageranordnung (56) und einer saugseitigen Lageranordnung (30, 90) zur Lagerung der Rotorwelle (12),
wobei die saugseitige Lageranordnung (30, 90) ein elektromagnetisches Lager mit einer Spule (32) eines Elektromagneten sowie einem fest mit der Rotorwelle (12) rotierenden Lagerelement (34) aufweist,
wobei die Spule (32) des elektromagnetischen Lagers in einer in einem Gehäuseelement (40) vorgesehenen als Kreisring-Zyliinder ausgebildeten Ausnehmung (38) angeordnet ist, die die Rotorwelle (12) in einem Endbereich umgibt, wobei die Ausnehmung (38) durch ein Verschließelement (42) sowie Dichtelemente (44) druckgekapselt und verschlossen ist,
**dadurch gekennzeichnet, dass** das Lagerelement (34) in einem Hochvakuumbereich der Turbomolekularpumpe angeordnet und somit im Betrieb niedrigen Drücken von weniger als 10⁻³ mbar ausgesetzt ist und
das Verschließelement rohrförmig ist.

2. Turbomolekularpumpe nach Anspruch 1, **dadurch gekennzeichnet, dass** in dem Hochvakuumbereich ein Druck von weniger als 10⁻⁵ mbar, insbesondere weniger als 10⁻¹⁰ mbar herrscht.

3. Turbomolekularpumpe nach Anspruch 1 oder 2, **dadurch gekennzeichnet, dass** die saugseitige Lageranordnung (30) ausschließlich als Radiallager oder als Radial- und Axiallager ausgebildet ist.

4. Turbomolekularpumpe nach einem der Ansprüche 1 bis 3, **dadurch gekennzeichnet, dass** mindestens ein Lagersensor (46) innerhalb der druckgekapselten Ausnehmung (38) angeordnet ist.

5. Turbomolekularpumpe nach einem der Ansprüche 1 bis 4, **dadurch gekennzeichnet, dass** die druckseitige Lageranordnung (56) als Radial- und Axiallager ausgebildet ist und vorzugsweise ein elektromagnetisches Lager aufweist.

6. Turbomolekularpumpe nach einem der Ansprüche 1 bis 5, **dadurch gekennzeichnet, dass** auch das druckseitige Lager ein mit der Rotorwelle (12) verbundenes Lagerelement (60) aufweisen.

7. Turbomolekularpumpe nach einem der Ansprüche 1 bis 6, **dadurch gekennzeichnet, dass** die saugseitige Lageranordnung (30) im Bereich der Saugseite (22) der gesamten Rotoreinrichtung (14) angeordnet ist.

8. Turbomolekularpumpe nach einem der Ansprüche 1 bis 7, **dadurch gekennzeichnet, dass** die gesamte Rotoreinrichtung (14) zwischen den beiden Lageranordnungen (56, 30) angeordnet ist.

## Claims

1. A turbomolecular pump, comprising
a rotor shaft (12) carrying at least one rotor means (14), and
a discharge-side bearing assembly (56) and a suction-side bearing assembly (30, 90) for supporting said rotor shaft (12),
wherein said suction-side bearing assembly (30, 90) includes an electromagnetic bearing comprising a coil (32) of an electromagnet as well as a bearing element (34) arranged for rotation with said rotor shaft (12),
wherein said coil (32) of said electromagnetic bearing is arranged in a recess (38) configured as a circular ring cylinder and provided in a housing element (40), which recess surrounds said rotor shaft (12) in an end area, wherein said recess (38) is pressure-capsulated and closed by a closing element (42) as well as sealing elements (44),
**characterized in that**
said bearing element (34) is arranged in a high-vacuum area of the turbomolecular pump and is thus subjected to low pressures of less than 10⁻³ mbar during operation, and
the closing element is tubular.

2. The turbomolecular pump according to claim 1, **characterized in that** in the high-vacuum area a pressure of less than 10⁻⁵ mbar, in particular less than 10⁻¹⁰ mbar prevails.

3. The turbomolecular pump according to claim 1 or 2, **characterized in that** the suction-side bearing assembly (30) is configured exclusively as a radial bearing or as a radial and axial bearing.

4. The turbomolecular pump according to any one of claims 1 to 3, **characterized in that** at least one bearing sensor (46) is arranged inside the pressure-capsulated recess (38).

5. The turbomolecular pump according to any one of claims 1 to 4, **characterized in that** the discharge-side bearing assembly (56) is configured as a radial and axial bearing and preferably includes an electromagnetic bearing.

6. The turbomolecular pump according to any one of claims 1 to 5, **characterized in that** the discharge-side bearing, too, includes a bearing element (60) connected to the rotor shaft (12).

7. The turbomolecular pump according to any one of claims 1 to 6, **characterized in that** the suction-side bearing assembly (30) is arranged in the area of the suction side (22) of the overall rotor means (14).

8. The turbomolecular pump according to any one of claims 1 to 7, **characterized in that** the overall rotor means (14) is arranged between the two bearing assemblies (56, 30).

## Revendications

1. Pompe turbomoléculaire avec
au moins un arbre de rotor (12) portant un dispositif rotor (14) et
un dispositif de palier (56) du côté pression et un dispositif de palier (30, 90) du côté aspiration pour supporter l'arbre de rotor (12),
le dispositif de palier (30, 90) du côté aspiration comprenant un palier électromagnétique avec une bobine (32) d'un électro-aimant ainsi qu'avec un élément de palier (34) solidaire en rotation avec l'arbre de rotor (12),
la bobine (32) du palier électromagnétique étant disposée dans un évidement (38) prévu dans un élément de carter (40) et configuré comme un cylindre circulaire, qui entoure l'arbre de rotor (12) dans une zone d'extrémité, l'évidement (38) se présentant comme une capsule sous pression et étant fermé par un élément obturateur (42) ainsi que des éléments d'étanchéité (44),
**caractérisée en ce que**
l'élément de palier (34) est disposé dans une zone de vide poussé de la pompe turbomoléculaire et est ainsi exposé, en fonctionnement, à des faibles pressions de moins de 10⁻³ mbar et que l'élément obturateur présente une forme tubulaire.

2. Pompe turbomoléculaire selon la revendication 1, **caractérisée en ce que** dans la zone de vide poussé, il y a une pression de moins de 10⁻⁵ mbar, notamment de moins de 10⁻¹⁰ mbar.

3. Pompe turbomoléculaire selon la revendication 1 ou 2, **caractérisée en ce que** le dispositif de palier (30) du côté aspiration est configuré exclusivement comme palier radial ou comme palier radial et axial.

4. Pompe turbomoléculaire selon l'une des revendications 1 à 3, **caractérisée en ce qu'**au moins un capteur de palier (46) est disposé à l'intérieur de l'évidement (38) se présentant comme une capsule sous pression.

5. Pompe turbomoléculaire selon l'une des revendications 1 à 4, **caractérisée en ce que** le dispositif de palier (56) du côté pression est configuré comme palier radial et axial et comprend, de préférence, un palier électromagnétique.

6. Pompe turbomoléculaire selon l'une des revendications 1 à 5, **caractérisée en ce que** le palier du côté pression comprend, lui aussi, un élément de palier (60) relié à l'arbre de rotor (12).

7. Pompe turbomoléculaire selon l'une des revendications 1 à 6, **caractérisée en ce que** le dispositif de palier (30) du côté aspiration est disposé dans la zone du côté aspiration (22) du dispositif de rotor (14) entier.

8. Pompe turbomoléculaire selon l'une des revendications 1 à 7, **caractérisée en ce que** le dispositif de rotor (14) entier est disposé entre les deux dispositifs de palier (56, 30).
